# EUROPÄISCHE PATENTSCHRIFT

(11) **EP 1 178 917 B1**
(45) Veröffentlichungstag und Bekanntmachung des Hinweises auf die Patenterteilung: **16.04.2003**
(21) Anmeldenummer: 00945531.2
(22) Anmeldetag: 17.05.2000
(51) Int. Cl.: B62D 25/12, B60R 21/34

(54) **FRONTHAUBENANORDNUNG**
FRONT HOOD SYSTEM
SYSTEME DE CAPOT AVANT

(30) Priorität: 17.05.1999 DE 19922454; 17.05.1999 DE 19922107; 17.05.1999 DE 19922455; 08.10.1999 DE 19948460
(43) Veröffentlichungstag der Anmeldung: 13.02.2002
(73) Patentinhaber: Edscha AG, 42855 Remscheid (DE)
(72) Erfinder: POLZ, Andreas, D-45881 Gelsenkirchen (DE); MROWKA, Peter, D-42853 Remscheid (DE)
(74) Vertreter: Sparing, Rolf Klaus
(86) Internationale Anmeldenummer: DE0001603
(87) Internationale Veröffentlichungsnummer: WO00069709

(56) Entgegenhaltungen:
- EP-A- 0 509 690
- EP-A- 0 630 801
- DE-A- 19 706 878
- US-A- 3 643 755

## Beschreibung

Die Erfindung betrifft eine Fronthaubenanordnung nach dem Oberbegriff des Anspruchs 1. Die Erfindung betrifft weiterhin ein Viergelenk-Scharnier nach dem Oberbegriff des Anspruchs 23.

Aus der Praxis sind inzwischen zahlreiche Sicherheitseinrichtungen wie Airbag und dgl. für Insassen von Personenkraftwagen bekannt. Dagegen sind Schutzmaßnahmen für Fußgänger, die vom Bug einen Personenkraftwagen erfaßt werden, bisher kaum vorgeschlagen oder praktisch umgesetzt worden. Als besonders problematisch erweisen sich Unfälle mit Fußgängem, die bei Geschwindigkeiten bis zu 60 km/h erfolgen, da der Fußgänger, wenn er frontal erfaßt wird, oft mit dem Kopf auf die Motorhaube des Personenkraftwagen aufschlägt und an dieser Verletzung stirbt. Die Schwere der Verletzung ergibt sich dadurch, daß die zumeist aus dünnem Blech ausgebildete Front- bzw. Motorhaube zwar dazu neigen würde, sich zu verbiegen, es aber zu einem Aufschlag auf unter der Motorhaube angeordneten, praktisch nicht oder nur schwer deformierbaren Teilen wie dem Motorblock, dem Federbeindohm, dem Luftfilter, dem Ventildeckel oder den Längs- und Querträgern des Fahrzeugs kommt. Es wäre wünschenswert, wenn der Aufprall insbesondere des Kopfes eines Fußgängers, in seinen Folgen abgemildert werden könnte. Bei Geschwindigkeiten über 60 km/h wird dagegen der Fußgänger, nachdem er erfaßt wurde, über das Fahrzeug geschleudert.

DE-C-29 22 893 schlägt vor, die Motorhaube und den Kotflügel im Bereich der zwischen diesen beiden Teilen gebildeten Fuge mit entlang der beiden Teile verlaufenden, energieabsorbierenden U-Profilen auf Aufbauteilen abzustützen, die im Falle eines Zusammenpralls den Aufprall in Deformationsenergie umwandeln. Nachteilig bei dieser Anordnung ist einerseits, daß schon erhebliche Kräfte auf die Profile einwirken müssen, um diese zu verbiegen. Zudem sind diese sonst nutzlosen U-Profile kostspielig in der Anschaffung und aufwendig zu montieren.

DE-A-27 37 876 beschreibt eine Aufprallschutzvorrichtung, die ein netzartiges Auffangelement mittels einer vorgespannten Schwenkklappe aus einer Ruheposition, in der das Netz im wesentlichen an der Fronthaube anliegt, in eine Auffangposition verlagert, welche im wesentlichen vor der Windschutzscheibe des Kraftfahrzeugs verläuft. Diese Einrichtung dient mehr der Windschutzscheibe als dem Schutz des Fußgängers vor einem zu harten Aufprall auf die Fronthaube. Außerdem kann jede Berührung des die Schwenkbewegung auslösenden, in der vorderen Stoßstange integrierten Sensors das Netz dazu veranlassen, ausgelöst zu werden, wodurch eine Vielzahl von Konstellationen eintreten, in denen das Netz dem Fahrer die gesamte Sicht nimmt.

DE-A-28 41 315 beschreibt eine Sicherheitseinrichtung, bei der in Reaktion auf ein Signal eines im Frontbereich eines Fahrzeugs angeordneten Sensors zur Erfassung einer Kollision mit einem Fußgänger die Fronthaube aus einer Ruheposition in eine demgegenüber angehobene Aufprallposition durch eine Kolbe-Zylinder-Einheit verlagert wird, wobei die Verlagerung durch einen Energiespeicher erfolgt. Beim Anheben wird die Fronthaube um eine an der Stirnseite des Fahrzeugs angeordnete horizontale Drehachse verschwenkt.

DE-A-197 10 417 beschreibt eine Anordnung zum Anheben der Fronthaube, bei der eine Verschwenkung um eine an der Stirnseite des Fahrzeugs angeordnete horizontale Drehachse durch dieselbe Gasfeder ausgelöst wird, die auch das Anheben der an der anderen Ende angelenkten Fronthaube unterstützt.

DE-A-197 21 565 beschreibt eine Sicherheitseinrichtung an Kraftfahrzeugen zum Anheben der Fronthaube, bei der das Anheben der Fronthaube geschwindigkeitsabhängig durch einen mit dem Haubenschloß integrierten Mechanismus erfolgt. Hierzu wird entweder die üblicherweise aus Sicherheitsgründen aus der Fahrerkabine ausgelöste Entriegelung des mit einer Druckfeder beaufschlagten Schlosses durch einen Sensor, der durch einen Aufprall ausgelöst wird, ausgelöst, oder alternativ hierzu insbesondere bei höheren Geschwindigkeiten eine in den Schließbolzen der Haubenschlosses integrierte Kolben-Zylinder-Einheit durch eine Treibladung expandiert. Nachteil dieser Anordnung ist zunächst, daß die zum Schließen der Fronthaube erforderliche Kraft einen bestimmten Schwellenwert nicht übersteigen darf, um dem Fahrer zu erlauben, die Fronthaube bequem zu schließen. Da die auftreffenden Kräfte bei einem Personenunfall bedeutend sind, wird die Fronthaube schnell herabgedrückt und es kommt zu den bekannten Personenschäden insbesondere im Kopfbereich. Auch das Vorsehen einer Treibladung zum Expandieren Kolben-Zylinder-Einheit ist problematisch, da deren Haltbarkeit, insbesondere bei wenig geschützter Anordnung, begrenzt und der Austausch problematisch ist. Außerdem besteht die Gefahr, daß Druckfeder und die Kolben-Zylinder-Einheit gleichzeitig ausgelöst werden, wodurch die Öffnung der Fronthaube so groß werden würde, daß der Fahrtwind die Haube gegen die Windschutzscheibe in Anlage bringt und dem Fahrer die Sicht versperrt.

DE-A-27 11 338 beschreibt eine Einrichtung zum Dämpfen des Aufpralls eines Fußgängers, bei der ein Luftsack im Bereich des Windlaufs angeordnet ist, dessen Befüllung durch eine Sensorsignal ausgelöst wird. Dabei kann der Luftsack so angeordnet sein, daß er zugleich einen Teil der Fronthaube anhebt, wobei er hierzu eine Federkraft überwindet, die zwei über einen Drehpunkt miteinander verbundene Lenker, von denen einer drehbar an der Fronthaube und der andere drehbar an einem festen Teil des Kraftfahrzeugs angeordnet ist, in eine angewinkelte Lage vorspannt. Ferner wird vorgeschlagen, nachgiebige Profilkörper in Streifenform in der Art einer Dichtung zwischen Haube und Seitenteilen anzuordnen, um damit einen weiteren Schutz beim Aufprall zu schaffen.

DE-A-27 11 339 beschreibt eine an der Frontseite angelenkte Fronthaube, bei der die Anlenkung derart nachgiebig ausgebildet ist, daß sie eine horizontale Verschiebung der Fronthaube durch den Anprall eines Fußgängers zuläßt, wobei die nach hinten verlagerte Fronthaube an der hinteren Seite mit einem Ende eines starren Verriegelungselements verbunden ist, dessen anderes Ende bei Verschiebung der Fronthaube nach hinten in einer Führungskurve derart nach oben und nach hinten verlagert wird, daß die Fronthaube eine Bewegung nach oben ausführt. Dieses Anheben funktioniert nur unter der Voraussetzung, daß es tatsächlich zu einer horizontalen Verlagerung der Fronthaube kommt, was beispielsweise beim Aufprall von Kindern nicht immer gewährleistet ist.

Die gattungsbildende DE-A-197 12 961 beschreibt die Anordnung einer Fronthaube an einem Fahrzeug, bei der ein Scharnier auf einem Schamierträger angeordnet ist, welcher Scharnierträger im Falle eines aufprallenden Fußgängers nach oben verschwenkt wird, um die Fronthaube anzuheben. Problematisch ist bei dieser Anordnung, daß das Haubenschfoß für die Fronthaube eine Schwenkachse festlegt, die keine wahlfreie Verlagerung des Scharnierträgers zuläßt, weshalb der beschriebene Schamierträger beispielsweise blockiert.

EP-B-0 630 801 beschreibt eine Fronthaubenanordnung, bei der die Scharnieranordnungen für die Lagerung der Fronthaube an der Karosserie im frontalen Bereich des Motorraums vorgesehen sind, und die Verriegelungsmittel im achterlichen Teil des Motorraums angeordnet sind. Die Scharnieranordnung ist als Viergelenk ausgestaltet, welches als Besonderheit insgesamt um eine Achse verschwenkbar ist, die zwischen dem das Karosserieteil bildende Teil und der Karosserie verläuft, so daß eine Veränderung der Lenker des Viergelenks beim Öffnen und Schließen der Fronthaube ebenso wenig eintritt wie im Falle eines Fußgängeraufpralls. Zum Öffnen und Schließen wird die Fronthaube mit dem Viergelenk-Scharnier um die Achse verlagert, im Falle eines Fußgängeraufpralls übernimmt das Viergelenk die vertikale und horizontale Lageänderung der Fronthaube.

DE-C-39 16 739 beschreibt eine Viergelenk-Anlenkung für eine Kofferraumhaube, bei der einer der beiden Lenker des Viergelenks als "Knick-Gelenk" ausgestaltet ist, und für die Montage der Heckscheibe durch Lösen einer Schraube aktiviert werden kann, wodurch die eigentliche Schwenkbewegung des Viergelenks verlassen wird und der Kofferraumdeckel zurückziehbar ist, um die Heckscheibe zu montieren. Es versteht sich, daß in dieser Lage der Kofferraumdeckel nicht in dem Schloß eingerastet ist. Es ist offensichtlich, daß diese Veränderung der Viergelenk-Anordnung nicht aufgrund eines Fußgängeraufpralls geschieht, sondern durch das Lösen einer Schraube, was bei einem Aufprall nicht möglich ist.

DE-A-33 15 129 beschreibt ein Heckklappenscharnier, das in häufig anzutreffender Weise als Schwanenhals ausgestaltet ist und bei dem das für den Einsatzfall vorgesehene Hauptgelenk dadurch außer Funktion gesetzt werden kann, daß eine Schraubverbindung, die einen ersten Abschnitt und einen zweiten Abschnitt des Schwanenhalsabschnitts verbindet, gelöst wird, wodurch eine Feder den ersten Abschnitt verriegelt und das Schwenkgelenk nunmehr um ein Hilfsgelenk schwenkt. Hierbei handelt es sich allerdings nicht um ein Mehrgelenk, wobei das Lösen der Schraubverbindung nicht durch den Aufprall eines Fußgängers erfolgt oder dazu bestimmt ist, bei äußeren Belastungen der Klappe zerstört zu werden.

FR-A-2 690 445 beschreibt einen Kofferraumdeckel, der um eine durch ein Eingelenk definierte Schwenkachse schwenkbar ist, wobei eine Unterstützungseinrichtung, die um eine zur Achse parallele Achse schwenkbar ist, als Knickgelenk-Anordnung ausgebildet ist, die im Bereich. des Kofferraumdeckels schwenkbar angeordnet ist. Hierbei handelt es sich bereits nicht um ein Mehrgelenk. Ferner definiert die Unterstützungseinrichtung auch nicht die Schwenkachse der Haubenanordnung.

US-A-3 643 755 zeigt eine Fronthaubenanordnung, bei der die Fronthaube eines Kraftfahrzeugs über ein Scharnier an die Karosserie des Kraftfahrzeugs angelenkt ist. Unter der Last eines Aufpralls bzw. Zusammenstoßes soll die Fronthaube nach hinten unterhalb einer Kante des Motorraums verlagert werden. Zu diesem Zweck ist ein Scharnier mit zwei Lenkern vorgesehen. Der erste Lenker ist über einen Bolzen gelenkig an ein karosserieseitiges Anschlagteil befestigt und über einen Stift an dem karosserieseitigen Anschlagteil festgelegt. Der zweite Lenker ist als Schwanenhals Bautyp ausgebildet und einerseits an der Fronthaube schwenkbar festgelegt ist und andererseits um eine Schwenkachse mit dem ersten Lenker zum Öffnen und Schließen der Fronthaube gelenkig angeordnet. Bei Überlast wird der Stift abgeschert und der erste Lenker um den Bolzen verschwenkt, wodurch die Fronthaube abgesenkt wird. Ein im normalen Betrieb betätigbarer Lenker wird jedoch nicht aufgetrennt. Der eigentliche Lenker, der als Schwanenhals Bauart ausgebildet ist, ist nicht zweiteilbar.

EP-A-0 509 690 beschreibt eine Fronthaube, die an ihrer Vorderseite derart an der Fahrzeugstruktur angelenkt ist, daß aufgrund eines Anpralls die Fronthaube nach hinten verlagert wird, wobei die an der hinteren Seite angeordneten Verschluß- bzw. Schwenkmittel aufgrund einer Bewegung der Fronthaube nach hinten eine Schwenkbewegung der Fronthaube nach oben auslösen, so daß der Deformationsweg der Haube unter dem Aufprall eines Fußgängers vergrößert wird. Im Betriebszustand ist die Fronthaube um ein einziges Gelenk schwenkbar. In diesem Gelenk ist ein erster Lenker gelagert, dessen anderes Ende an der Fronthaube gelagert ist. In dem selben karosserieseitigen Lager ist ein zewiter Lenker gelagert, der gelenkig mit einem dritten Lenker verbunden ist, welcher dritter Lenker wiederum an der Fronthaube gelagert ist. Bei einem Fußgängeraufprall erfolgt eine Verlagerung der Fronthaube und bewirkt ein Nachgeben des Gelenks zwischen dem zweiten und dem dritten Lenker, wodurch die beiden Lenker einen anderen Winkel zueinander einnehmen und das vordere Ende der Fronthaube nach hinten verlagert wird, und die Fronthaube auf ihrer hinteren Seite angehoben wird. Auch hier tritt ein Anheben der Fronthaube erst mit sehr kräftigem Verlagern der Fronthaube ein, während ein schwacher Aufprall die Fronthaube nicht nach hinten und somit auch nicht nach oben verlagert.

Insgesamt ist noch keine Lösung vorgeschlagen worden, die ein kostengünstige und nach einem Einsatz leicht wiederherstellbare Anordnung vorschlägt, welche konstruktiv so ausgereift ist, daß sie in Serienfahrzeugen eingesetzt werden könnte.

Es ist die Aufgabe der Erfindung, eine Fronthaubenanordnung nach dem Oberbegriff des Anspruchs 1 bzw. ein Viergelenk-Scharnier nach dem Oberbegriff des Anspruchs 23 vorzuschlagen, die einen kostenmäßig und technisch realisierbaren Fußgängerschutz liefern.

Diese Aufgabe wird bei der eingangs genannten Fronthaubenanordnung erfindungsgemäß mit den kennzeichnenden Merkmalen des Anspruchs 1 bzw. bei dem eingangs genannten Viergelenk-Scharnier mit den kennzeichnenden Merkmalen des Anspruchs 23 gelöst.

Die Ausbildung des Mehrgelenk-Scharniers mit wenigstens einem mit veränderbarer Länge ausgebildeten Lenker ist eine Verkörperung des allgemeinen Gedankens der Erfindung, unter Überlast eine Veränderung des Abstands der beiden Anlenkungen des wenigstens einen Lenkers zuzulassen, um damit das Mehrgelenk für eine weitere Schwenkkurve, die sich von der eigentlichen Schwenkkurve des Mehrgelenks unterscheidet, freizugeben.

Die erfindungsgemäße Fronthaubenanordnung weist vorteilhaft drei Endsteliungen auf, neben der bekannten Schließstellung, bei der die Fronthaube verriegelt ist und die während der Fahrt des Fahrzeugs eingenommen wird und der ebenfalls bekannten Öffnungsstellung, bei der der Zugang zu dem Motorraum für eine Bedienperson freigegeben ist noch eine dritte Endstellung, die als Überlaststellung bezeichnet werden kann und die nachstehend noch in Einzelheiten erläutert wird, um den Anforderungen an eine unter dem Aufprall eines Fußgängers zurückweichenden der Fronthaube zu genügen.

Das Mehrgelenk-Scharnier kann vorteilhaft als Viergelenk-Scharnier ausgebildet sein, es ist aber alternativ möglich, es als Siebengelenk-Scharnier auszubilden oder mit nur einem Lenker als Zweigelenk-Scharnier.

In der Ausgangslage ist die Fronthaube durch das Haubenschloß, das vorzugsweise im vorderen Bereich der Fronthaube angeordnet ist, verriegelt, wobei das Viergelenkschamier aus zwei Lenkem und zwei an den in den Endbereichen der Lenkern angeordneten Drehpunkten gelenkig mit den Lenkem verbundenen Scharnierteilen, die über bekannte Anschlagmittel mit der Fronthaube bzw. mit der Karosserie des Fahrzeugs verbunden sind, einen Schwenkweg der Fronthaube definiert, der ein freies hin und her schwenken der Fronthaube zwischen der Öffnungsstellung und der Schließstellung zur wahlweisen Freigabe des Zugangs zum Motorraum ermöglicht. In der Öffnungsstellung, deren Erreichen vorzugsweise mit Unterstützung einer Feder, beispielsweise einer Gasfeder, unterstützt ist, kann die Fronthaube über eine Stange zwischen Karosserie und Fronthaube gehalten werden, um einer Bedienperson einen ungefährdeten Zugang zu ermöglichen. Alternativ kann bei Erreichen einer Übertotpunktlage des Viergelenk-Scharniers bzw. der Viergelenk-Scharniere, da in der Regel an beiden hinteren Ecken der in der Abwicklung viereckig ausgebildeten Fronthaube jeweils eines angeordnet ist, die Fronthaube ohne externe Hilfsmittel gehalten sein.

Während der Fahrt des Fahrzeugs, bei dem es sich Zweckmäßigerweise um einen Kraftwagen handelt, ist die Fronthaube in ihrer Schließstellung angeordnet und durch das Haubenschloß verriegelt, so daß der Motorraum, in dem eine Reihe von harten Teilen wie der Motorblock, der Federbeindohm und andere angeordnet sind, durch die Fronthaube in der Art einer schützende Hülle verschlossen ist, die in einem ausreichenden Abstand von den wenigstens bei Aufprall für den Kopf eines Fußgängers schädlichen Teile angeordnet ist, und wahlweise an der Unterseite der Fronthaube mit einem komprimierbar ausgebildeten, ggf. mit Aufprall- und/oder Schallenergie aufnehmenden Schaum ausgekleidet ist oder auch einen freien Abstand aufweist.

Die erfindungsgemäße Fronthaubenanordnung ermöglicht ausgehend zumindest von der Schließstellung der Fronthaube eine Verlagerung der Fronthaube in Richtung auf die Überlaststellung, in der der Abstand zwischen der Fronthaube und den gefährlichen Teilen des Motorraums reduziert ist, wobei erfindungsgemäß im Überlastfall das Viergelenk-Scharnier sowie ggf. weitere Teile der Fronthaubenanordnung für die Verlagerung in Richtung auf die Überlaststellung bzw. in die Überlaststellung einen derartigen Anteil an Aufprallenergie des Fußgängers in Verlagerungs- bzw. Deformationsenergie umwandeln, daß der Aufprall bei einer Geschwindigkeit des Fahrzeugs von bis zu 60 Km/h für den Fußgänger mit hoher Wahrscheinlichkeit für diesen keine tödlichen Folgen mehr hat.

Unter der Last eines Aufpralls eines Fußgängers wird die Fronthaube durch ein definiertes Knicken wenigstens eines Lenkers des Viergelenk-Schamiers in Richtung auf die Überlaststellung verlagert, wobei der Verlagerungsweg durch Urnwandlung der Aufpraltenergie aufgrund des allmählichen Nachgebens der Fronthaube den Aufprall mildert und damit die Schwere des Aufpralls reduziert. Es versteht sich, daß auch eine Deformationsenergie der Fronthaube selbst hierbei zu berücksichtigen ist, wobei dies durch die Einspannung in ein Haubenschloß und zwei Viergelenk-Scharniere in der Regel nur begrenzt möglich ist.

Um die Verlagerungsbewegung der Fronthaube in Richtung auf die Überlaststellung zu ermöglichen, ist wenigstens einer der Lenker des Vierglenk-Scharniers wenigstens zweiteilbar, ggf. aber auch in mehr Teile teilbar ausgebildet, wobei die Art der Teilung, solange sie mit einer Energieumwandlung einhergeht, nicht auf eine bestimmte technische Ausgestaltung festgelegt ist. Es kommen sowohl reversible Zweiteilungen durch vorsehen von Energiespeichern in der Art von Federn oder dergleichen in Betracht als auch irreversible Zweiteilungen durch absprengbare Schalungen des Lenkers, komprimierbaren Schaum, Metallegierungen, die wenigstens abschnittsweise eine Zweiteilung bei entsprechender Unterbrechung des Querschnitts des Lenkers zulassen oder auch als Klemmpassung ausgebildete, zweiteilig zusammen gesteckte Lenker, bei denen das Aufweiten der Preßpassung die erforderliche Deformationsenergie liefert.

Zweckmäßigerweise sind beide Teillenker des wenigstens zweiteilbaren Lenkers des Viergelenkscharniers miteinander gelenkig verbunden, wobei die gelenkige Verbindung durch ein Fixierglied, vorzugsweise aufgehoben ist, so daß sich die beiden Teillenker in Öffnungs- bzw. in Schließstellung wie ein starrer Lenker verhalten, und lediglich die die Scharnierteile mit den Lenkern verbinden Gelenke wirksam sind. Es ist vorteilhaft möglich, beide Lenker des Viergelenk-Scharniers wenigstens zweiteilbar auszubilden, wodurch sich bei Zweiteilung ein neues wirksames Viergelenksystem ergibt, das gemäß dem gewünschten Verlagerungsweg auf die Fronthaube abgestimmt werden kann. Neben dem Vorteil, daß bei zwei zweiteilbaren Lenkern die Aufprallenergie auf beide Lenker verteilt wird und somit die Fronthaubenanordnung besser dimensioniert werden kann, läßt sich hierdurch auch ein asymmetrisches Aufprallen auf die Fronthaube besser auffangen, und der für die Umwandlung der Aufprallenergie erforderliche Verlagerungsweg der Fronthaube kann entsprechend etwas kürzer vorgesehen werden, wodurch der von der Fronthaube zu den harten Teilen des Motorraums zu belassende Abstand reduziert werden kann und der Luftwiderstandsbeiwert des Fahrzeugs weniger beeinträchtigt wird. Zudem ist es dann möglich, die Verlagerungsbewegung um die Zwischengelenke dann so vorzusehen, daß bei Verschwenken in Richtung auf die Überlaststellung die Schwenkbewegung um das Haubenschloß herum eine Drehbewegung definiert, so daß eine horizontale Verschiebung der Fronthaube nicht vorgesehen werden muß.

Es ist alternativ möglich, einen ersten der beiden Teillenker des wenigstens einen zweiteilbaren Lenkers an einem der beiden Anschlagteile, z.B. dem Karesserieteil lösbar anzuordnen, so daß außerhalb des Überlastfalls der erste Teillenker die Funktion eines bekannten Lenkers übernimmt, wobei die karosserieseitige Anlenkung über ein Hilfsgelenk an dem anderen, zweiten Teillenker erfolgt, welcher selbst wiederum an das Karosserieteil angelenkt ist. Im Überlastfall wird die sonst feste Verbindung zwischen dem zweiten Teillenker und dem Karosserieteil aufgehoben, und das den zweiten Teillenker mit dem Karosserieteil verbindende Gelenk steht für die Verlagerung der Fronthaube zur Verfügung, wodurch eine von der durch Hilfsgelenk zwischen erstem und zweitem Teillenker und Gelenk im Haubenteil definierte Schwenkbewegung abweichende Schwenkkinematik ermöglicht wird.

Vorzugsweise umfaßt der wenigstens eine wenigstens zweiteilbare Lenker einen Energiespeicher, der die beiden Teillenker gegen die Aufprallenergie spannt, wobei aufgrund des Aufpralls die starre Verbindung der Teillenker aufhebbar ist. Diese Weiterbildung ist deswegen von besonderem Vorteil, weil möglicherweise unbeabsichtigte Belastungen durch andere Überlasten, beispielsweise dadurch, daß Kinder auf der Fronthaube auf und ab springen oder dergleichen, zwar zu einer Schwenkbewegung in Richtung auf die Überlaststellung der Fronthaube führen, die Fronthaube im Anschluß an die unbeabsichtigte Beanspruchung aber aufgrund des Energiespeichers wieder in die Schließstellung zurück verschwenken kann. Hierdurch kann die Fahrbereitschaft des Fahrzeugs nach einer Überlast oder einem Aufprall schnell wiederhergestellt werden und zudem das Viergelenk-Scharnier auch nach einem ersten Aufprall eines Fußgängers auf die Fronthaube mit unveränderter Charakteristik weiter eingesetzt werden. Der Energiespeicher ist zweckmäßigerweise so in dem Lenker angeordnet, daß er in der Schließstellung die Haltekraft der Fronthaube soweit unterstützt, daß bei einem Frontalzusammenstoß der Insassenschutz nicht herabgesetzt ist.

Zweckmäßigerweise umfaßt der Energiespeicher eine Feder, die wahlweise als Zug- oder Druckfeder ausgebildet sein kann, die die Lenkerteile gegen einen Anschlag spannt, wozu zweckmäßigerweise jeweils ein Ende der Feder an jeweils einem der Teillenker angreift. Der Energiespeicher kann beispielsweise eine oder mehrere an dem Gelenk angeordnete Drehfedern umfassen. Es ist möglich, eine dieser Federn auch als Froschfeder auszubilden, um eine erhöhte Ausgangsvorspannung vor dem Eintritt der Schwenkbewegung in Richtung auf die Überlasstellung vorzusehen.

Der Energiespeicher kann ferner einen deformierbaren Bestandteil umfassen, der die Aufprallenergie in Deformationsenergie durch irreversible plastische Formänderung des deformierbaren Bestandteils des Lenkers umwandelt. Hierbei wird durch die Zweiteilung des Lenkers die Aufprallenergie durch die plastische Umformung des deformierbaren Bestandteils abgebaut, wobei die hieraus resultierenden, einen Winkel zueinander aufweisende Lage der Teillenker nur durch eine erneute plastische Formänderung, beispielsweise mit Hilfe eines entsprechenden Werkzeugs, umkehrbar ist, weshalb für diesen Bestandteil nach einem Aufprall die Fronthaube bleibend in Richtung auf ihre Aufprallstellung verlagert bleibt.

Ein bevorzugter deformierbarer Bestandteil ist eine Ummantelung des Zwischengelenks aus Schaum oder Kunststoff, der absprengbar ist, wobei auch der gesamte Lenker aus diesem Material bestehen kann. Alternativ ist es möglich, den wenigstens einen zweiteilbaren Lenker als in zwei Kurzlenkerteile geteilten Lenker auszubilden, die vermittels einer Kunststoffumspritzung eine bei Überschreitung der Normallast brechende Soll-Bruchstelle definieren und so das Vierglenksystem freigeben, ohne daß ein Zwischengelenk vorgesehen ist. Diese Variante hat insbesondere den Vorteil, daß das Viergelenk-Scharnier durch Austauschen des gebrochenen Lenkers wiederherstellbar ist, wobei alternativ hierzu auch das gesamte Viergelenk-Scharnier ausgetauscht werden kann und der defekte Lenker durch Recycling ersetzt wird. Dieses System hat insbesondere den Vorteil, daß die Fronthaube im Falle eines Frontalzusammenstoßes mit einem anderen Fahrzeug oder gegen ein feststehendes Hindernis immer noch durch den anderen, starren Lenker gehalten wird, und hierdurch die Gefahr deutlich herabgesetzt ist, daß sich die Fronthaube durch die Frontscheibe drückt und damit in den Insassenraum des Fahrzeugs eindringt.

Alternativ zu der vorstehenden Lösung mit einer Kunststoffummantelung kommen auch Lenkerteile mit abscherbaren Verbindungen, insbesondere mit die beiden Teillenker durchsetzenden, abscherbaren Bolzen in Betracht, die eine preiswerte und zugleich sichere sowie einfach wiederherzustellende Verbindung definieren.

Es versteht sich, daß soweit vorstehend ein wenigstens zweiteilbarer Lenker bezeichnet ist, dieser nicht auf eine Teilung in zwei Teile beschränkt sein soll, sondern auch zugleich eine Teilung in mehr als zwei Teillenker umfaßt und damit auch z.B. mehrere Zwischengelenke.

Es versteht sich, daß das Fixierglied des zweiteilbaren Lenkers sowohl einen reversiblen als auch zugleich einen irreversiblen Bestandteil umfassen kann, wodurch die Abstimmung und Ausiegung des Viergelenk-Scharniers auf den zu erwartenden Aufprall und auf den Abstand des Aufpralls auf die von Fahrzeugmodell zu Fahrzeugmodell unterschiedlich große Fronthaube von den an der Fronthaube angeschlagenen Scharnierteilen der Viergelenk-Scharniere berücksichtigt werden kann, und ferner eine Standardisierung durch unterschiedliche Auslegung im wesentlichen der Feder bei einem bei verschieden Fahrzeugmodellen ansonsten gleichartigen plastisch formänderbaren Bestandteil vorgesehen werden kann.

Es versteht sich, daß besonders bevorzugt eine Fronthaubenanordnung ist, deren Verlagerungsbewegung vollständig reversibel ist, da insbesondere eine solche Anordnung sich in einfacher Weise bei routinemäßigen Überprüfungen des Fahrzeugs zu dessen technischer Überwachung auf Funktionsfähigkeit und Zuverlässigkeit prüfen läßt. Es ist daher zweckmäßig vorgesehen, daß für den Fall des Einsatzes von Bestandteilen, die eine irreversible Änderung im Falle eines Aufpralls ausführen, diese derart anzuordnen, daß sie durch optische Prüfung darauf untersucht werden können, ob sie bereits beschädigt sind.

Um eine Verlagerung ausgehend von der Schließstellung auf die Öffnungsstellung bzw. auf die Überlaststellung der Fronthaube relativ zur Karosserie des Fahrzeugs sicher zu stellen ist es zweckmäßig, daß das Viergelenk-Scharnier an die Karosserie anschlagende Scharnierteil fest an der Karosserie des Fahrzeugs anzuordnen, damit die Schwenkbewegung um die karosserieseitigen Drehpunkte der Lenker ausgeführt werden kann.

Gemäß einer bevorzugten Weiterbildung der Erfindung ist es möglich, daß bei einem Aufprall einer der Lenker des Viergelenk-Scharniers eine in Richtung auf die Funktionslage des Lenkers vorgespannte Energiespeichereinheit gegen ihre Vorspannung zur wenigstens teilweise Kompensation der Änderung des wenigstens einen Lenkers komprimiert. Der bei Verlagerung aus der Schließstellung auf die Öffnungsstellung der Fronthaube und zurück durch die Energiespeichereinheit vorgespannte Drehpunkt des Lenkers bleibt unverändert und wird erst im Falle eines Fußgängeraufpralls unter teilweise Abbau der Aufprallenergie gegen die vorgespannte Energiespeichereinheit unter Spannung derselben verlagert, wodurch der vorzugsweise starre Lenker gemeinsam mit der ihm zugeordneten Energiespeichereinheit die horizontale Verschiebung der Fronthaube aufgrund des wenigstens einen Lenkers kompensiert und damit ein Hineindrücken der Fronthaube in die Windschutzscheibe und damit in die Fahrgastzelle des Fahrzeugs vorteilhaft auch im Falle eines Frontalzusammenstoßes unterbindet.

Zweckmäßigerweise ist das Haubenschloß in seinem geschlossenen Zustand derart ausgebildet, daß es ein horizontales Verlagern der Fronthaube zuläßt, um die durch die aufgrund des wenigstens einen Lenkers im Überlastfall weiter nach hinten verlagerten, an der Fronthaube angreifenden Drehpunkte des wenigstens einen Lenkers eine entsprechende Verlagerungsbewegung der Frohthaube nach hinten zu ermöglichen. Zu diesem Zweck kann das Haubenschloß derart ausgebildet sein, daß es in einer üblichen Weise zur Entriegelung ausgebildet ist, im geschlossenen und verriegelten Zustand jedoch einen horizontalen Ausweichraum bereithält, der zweckmäßigerweise gegen einen Widerstand, der ebenfalls reversibel oder irreversible deformierbar ist, die Verlagerung der Fronthaube nach hinten ermöglicht. So kann beispielsweise der Ausweichraum die Aufnahme für eine Druckfeder bilden, die z.B. ein als Bügelteil ausgebildetes Halteteil der Fronthaube, das in dem Schloß verriegelt gehalten wird, in Richtung auf eine die Entriegelung ermöglichende Lage vorspannt und im Falle eines Fußgängeraufpralis gespannt wird, wodurch ein Teil der Aufprallenergie absorbiert wird. Diese Maßnahme ist besonders dann vorteilhaft, wenn der Aufprall des Kopfes eines Kindes, der überwiegend im vorderen Bereich der Fronthaube zu erwarten ist, abzufedern ist. Des weiteren ist es möglich, den Ausweichraum mit einem Kunststoffschaumteil auszukleiden, das unter dem Druck eines Aufpralls zerkrümelt und nach dem Aufprall durch ein Ersatzteil ersetzbar ist, wodurch die Funktionsfähigkeit der Fronthaubenanordnung auch nach einem ersten Aufprall für weitere Aufpralle gegeben ist.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand von bevorzugten Ausführungsbeispielen einer erfindungsgemäßen Fronthaubenanordnung näher erläutert.
- Fig. 1: zeigt eine ausschnittsweise schematisierte Seitenansicht eines Fahrzeugs mit einem bevorzugten Ausführungsbeispiel einer erfindungsgemäßen Fronthaubenanordnung.
- Fig.2: zeigt eine schematische Seitenansicht einer ersten Ausführungsform eines Viergelenk-Scharniers der Fronthaubenanordnung aus Fig. 1 bei geschlossener und geöffneter Fronthaube.
- Fig. 3: zeigt eine schematische Seitenansicht des Viergelenk-Scharniers aus Fig. 2 bei überlasteter Fronthaube.
- Fig. 4: zeigt eine schematische Seitenansicht einer weiteren Ausführungsform eines Viergelenk-Scharniers der Fronthaubenanordnung aus Fig. 1 bei geschlossener Fronthaube.
- Fig. 5: zeigt eine schematische Seitenansicht einer weiteren Ausführungsform eines Viergelenk-Scharniers der Fronthaubenanordnung aus Fig. 1 bei geschlossener bzw. überlasteter Fronthaube.
- Fig. 6: zeigt eine schematische Seitenansicht einer weiteren Ausführungsform eines Viergelenk-Scharniers der Fronthaubenanordnung aus Fig. 1 bei geschlossener Fronthaube.

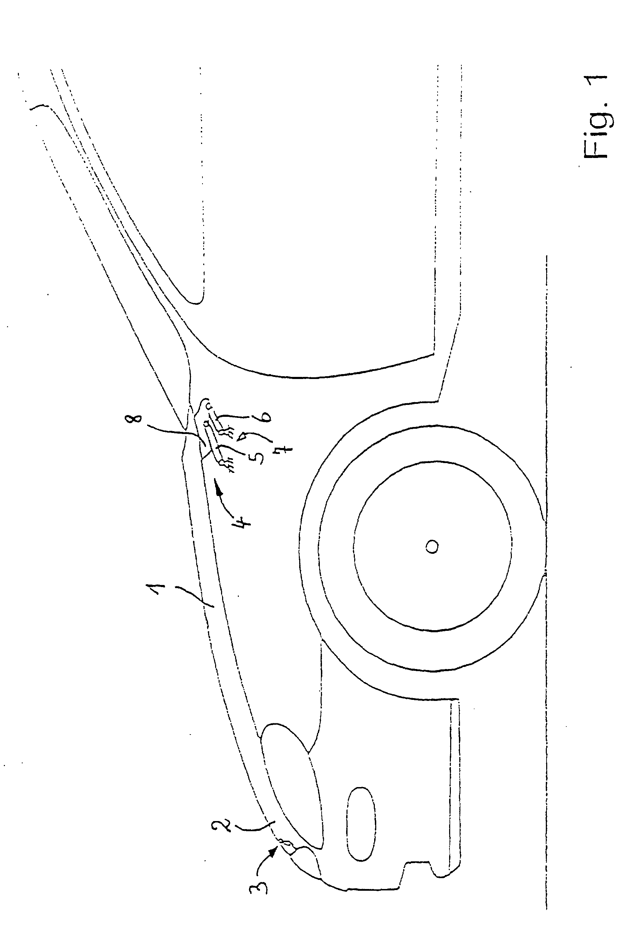

Fig. 1 zeigt in Seitenansicht die Frontpartie eines Kraftfahrzeuges, dessen Motorraum durch eine Fronthaube 1 verschließbar ist. Die Fronthaube 1 wird mittels eines im Vorderbereich 2 der Fronthaube 1 angeordneten Haubenschlosses 3 ver- bzw. entriegelt und ist an ihrer der Fahrerkabine zugewandten Seite jeweils randseitig mittels eines von zwei Scharnieren 4 an dem Rahmen der Karosserie angelenkt. Das Scharnier 4 ist vorliegend als Viergelenk-Scharnier ausgebildet, das aus einem längeren Lenker 5 und einem kürzeren Lenker 6 besteht, deren Gelenke an ein am Rahmen befestigten Teil 7 bzw. an einer an der Fronthaube 1 angeordnetes Teil 8 schwenkbar angelenkt sind. Die Fronthaube 1 läßt sich aus der in Fig. 1 dargestellten Schließstellung durch Verschwenken um die Gelenke am Rahmenteil 7 in seine Öffnungsstellung und wieder zurück verschwenken.

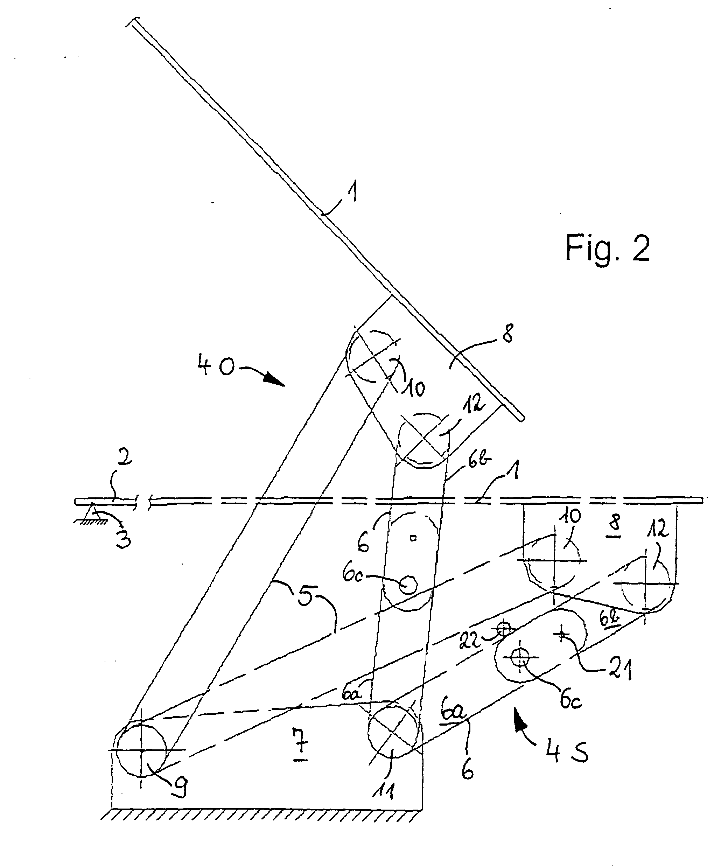

In Fig. 2 ist eine erste bevorzugte Ausführungsform des Scharniers 4 gezeigt, wobei die Drehgelenke des längeren Lenkers 5 mit 9 und 10 bezeichnet sind und die Drehgelenke des kürzeren Lenkers 6 mit 11 und 12 bezeichnet sind. Man erkennt, daß die Gelenke 9 bis 12 alle vier fest in dem zugeordneten Rahmenteil 7 bzw. Fronthaubenteil 8 angeordnet sind.

Während der längere Lenker 5 als starrer Lenker ausgebildet ist, ist der kürzere Lenker 6 als zweiteilbarer Lenker ausgebildet, der aus einem ersten, dem Rahmenteil 7 zugeordneten Teillenker 6a und einem zweiten, dem Haubenteil 8 zugeordneten Teillenker 6b besteht. Die Teillenker 6a, 6b sind über ein beispielsweise als Nietung ausgeführtes Gelenk 6c gelenkig miteinander verbunden und definieren einen Drehgelenk. Die beiden Teillenker 6a, 6b sind an einer Drehung um das Gelenk 6c durch eine starre Verbindung mittels eines als abscherbaren Bolzen ausgebildeten Verriegelungsglieds 21 miteinander verbunden. Somit verhält sich der aus den Teillenkern 6a, 6b zusammengesetzte Lenker 6 wie ein starrer Lenker 6, solange sich das Vierglenk-Scharnier 4 in seiner mit dem Symbol S angedeuteten und in Fig. 2 gestrichelt dargestellten Schließstellung oder in seiner mit dem Symbol O angezeigten und in Fig. 2 in durchgezogenen Linien dargestellten Öffnungsstellung befindet. Durch ein Abscheren des Bolzens 21 wird der kürzere Lenker 6 in die Lage versetzt, um das Gelenk 6c zu schwenken, wodurch die Bestimmung der Schwenkbahn der Fronthaube 1 aufgrund des Viergelenk-Scharniers 4 aufhebbar ist, und insbesondere der durch einen starren Lenker 6 definierte Abstand der Achsen der Gelenke 11, 12 bezüglich des dann zwischen diesen beiden Achsen wirksamen Lenkers veränderlich wird.

In Fig. 2 ist mit 22 ferner ein Anschlag bezeichnet, der an dem Haubenteil 8 angeordnet ist, so daß dieser beim Schließen der Fronthaube 1 den kurzen Lenker 6 gegen die Haubenbefestigung vorspannt. Hieraus folgt vorteilhaft eine eindeutige Positionierung der Haubenecken zur A-Säule hin. Der Anschlag 22 ist vorteilhaft einstellbar, um Toleranzen der Karosserie sowie der Fertigung des Scharniers 4 gerecht werden. Der Anschlag 22 dient insbesondere aber dazu, im Überlastfall den Aufprallimpuls auf den Abscherbolzen 21 zu übertragen. Alternativ ist es möglich, den Anschlag 22 an der Karosserie anzuordnen.

Wie in Fig. 2 genauer zu sehen, lastet ein Teil des Eigengewichts der Fronthaube 1 in der in Fig. 2 dargestellten Öffnungsstellung O des Viergelenk-Schamiers 4 auf den kürzeren Lenker 6, der unter dieser Last zur Vermeidung einer Schwenk-Kippbewegung der Fronthaube 1 nicht ausknicken soll. Der Abscherbolzen 21 sowie gegebenenfalls weitere Anschläge dienen dazu, das Ausknicken des kurzen Lenkers 6 um die Vernietung 6c zu unterbinden. Man erkennt, daß sowohl in der Schließstellung S als auch in der Öffnungsstellung O die Länge und Beschaffenheit des kürzeren Lenkers 6 im wesentlichen unverändert bleibt.

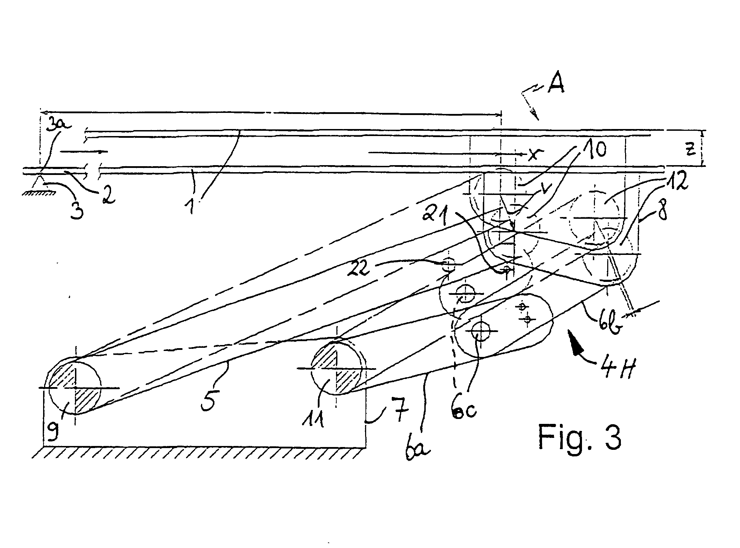

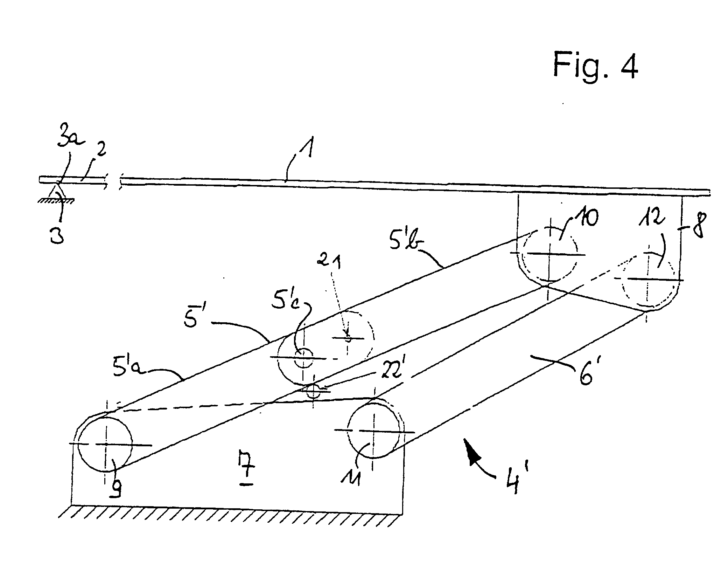

In Fig. 3 ist der Überlastfall aufgrund eines Fußgängeraufpralls auf die Fronthaube 1 und die sich hieraus ergebende Deformation des Viergelenk-Scharniers 4 insgesamt und insbesondere des kürzeren Lenkers 6 näher dargestellt. Gestrichelt ist in Fig. 4 die Schließstellung S dargestellt, während in durchgezogener Linie die Überlaststellung H aufgrund eines schematisch mit Pfeil A angedeuteten Aufpralls eines Fußgängers dargestellt ist. In Fig. 3 ist zudem schematisch das Haubenschloß 3 dargestellt, welches, wie in der schematischen Darstellung zu erkennen, verschieblich an der Karosserie angeordnet ist, um eine horizontale Verlagerung der Fronthaube 1, die einhergeht mit einem Verschwenken der Fronthaube 1 um die in dem Haubenschloß gebildete, mit 3a bezeichnete, Achse zu ermöglichen. Man erkennt, daß die Fronthaube 1 im Bereich des an diese angeschlagenen Haubenteils 8 einen Verlagerungsweg v ausführt, der mit dem Pfeil, der an der Achse des Drehgelenks 10 angetragen ist, illustriert ist. Der Weg v setzt sich aus einer horizontalen Komponente x und einer vertikalen Komponente z zusammen, die in Fig. 3 ebenfalls angetragen sind. Man erkennt also, daß bei Aufprall eines Fußgängers die Fronthaube sich um den Betrag z senkt und entsprechend ihren Abstand zu den gegebenenfalls harten und damit verletzungsgefährdenden Teilen im Motorraum verringert, während zugleich die Fronthaube 1 und damit auch das Haubenschloß 3 sich um den Betrag x, in Fahrtrichtung gesehen nach hinten, verlagert. Wäre der kürzere Lenker 6 ebenso wie der längere Lenker 5 starr ausgebildet, könnte die Verlagerungsbewegung durch das Viergelenk-Scharnier 4 nicht vollzogen werden, da die Viergelenke 9 bis 12 nur einen Schwenkweg, nämlich den, der für die Öffnungsbewegung der Fronthaube 1 zugrundegelegt wird, definieren und die Verlagerungsbewegung somit statisch überbestimmt wäre. Aufgrund der zweiteilbaren Ausbildung des kürzeren Lenkers 6 wird die statische Überbestimmung des Viergelenks 4 aufgehoben und die Umwandlung der Aufprallenergie eines Fußgängeraufpralls auf die Fronthaube 1 wird in die entsprechende Deformationsenergie (sowie in weitere, den Aufprall aus anderen Gründen abmindernde Energien) umgewandelt. Die Lageänderung der Achse des gelenks 12 des kürzeren Lenkers 6 ist in Fig. 3 mit d bezeichnet. Man erkennt, daß für eine relativ bedeutsame vertikale Verlagerung eine geringe wirksame Verlängerung des kürzeren Lenkers 6 ausreicht. Man erkennt ferner, daß durch die Zweiteilung des kürzeren Lenkers 6 die beiden Lenker 5 und 6 ihre wirksame Winkellage zueinander geringfügig geändert haben, die sonst statisch das Viergelenk 4 bestimmt.

Unter der Last eines Fußgängeraufpralls schert der Bolzen 21 aufgrund des durch den Anschlag 22 übertragenen Impulses ab und das Drehgelenk 6c wird frei gegeben, wobei aufgrund der hierdurch resultierende Unterbestimmung des Viergelenk-Scharniers 4 die Fronthaube 1 nicht mehr in ihrer Schließstellung S gehalten ist, sonder in Richtung auf ihre Überlaststellung H durchfällt. Die Aufprallenergie wird hierbei in die Abscherenergie für den Bolzen 21 umgewandelt, so daß das faktische Ausknicken des kürzeren Lenkers 6 durch die Schwenkbewegung um das Drehgelenk 6c zugleich mit einer Energieumwandlung der Aufprallenergie und damit einer Dämpfung des Aufschlags einhergeht. Es ist zu verstehen, daß anstelle des Bolzens 21 auch andere, auch größere Teile vorgesehen werden können, die aufgrund einer plastischen Formänderung mit dem Abscheren oder aufgrund einer elastischen Formänderung, beispielsweise ihrer Ausbildung als Feder, größere Energiemengen speichern bzw. verbrauchen können. Die Anordnung der beiden Teillenker 6a, 6b sowie des Abscherbolzens 21 ist dabei derart ausgewählt, daß der Überstand des unteren Teillenkers 6a über das Hilfsgelenk 6c nicht in den Verfagerungsweg der Fronthaube 1 hinein ragt und dort einen harten Gegenstand darstellt, an dem sich ein Fußgänger verletzen könnte, vielmehr wird der Überstand aus der Verlagerungszone der Fronthaube 1 vorteilhaft ferngehalten.

So ist es insbesondere vorzugsweise möglich, eine Drehfeder um das Gelenk 6 anzuordnen, deren eines Ende gegen den Teillenker 6a und das andere Ende gegen den Teillenker 6b vorgespannt ist, und die in Richtung auf ein Durchfallen des Viergelenk-Scharniers 4 spannbar ist, um einen Fußgängeraufprall abzumildern, jedoch in ihrer Spannrichtung durch Endanschläge an eine über der ausgefluchteten Lage der beiden Teillenkers 6a, 6b hinausgehenden Verschwenkung gehindert ist. In diesem Zusammenhang ist anzumerken, daß die idealtypische Darstellung der Lenker 5, 6 als gerade Lenker die am einfachsten realisierbare Ausführungsform betrifft, es aber gleichwohl möglich ist, die Lenker 5, 6 gekrümmt auszubilden, wobei die ideellen Lenker mit den Achsen der Lenker 5, 6 wie im Ausführungsbeispiel beschrieben zusammenfallen würden.

Soweit nicht ausdrücklich angegeben, bezeichnen dieselben Bezugszeichen bei der Beschreibung der nachfolgenden Ausführungsbeipiele dieselben Teile wie in den Fig. 1 bis 3, so daß in soweit auf die vorstehende Erläuterungen verwiesen wird, um Wiederholungen zu vermeiden.

Eine weitere Ausführungsform eines Viergelenkscharniers 4' für eine Fronthaubenanordnung gemäß Fig. 1 ist in Fig. 4 dargestellt. Die vorliegende Fronthaubenanordnung bezeichnet die Schließstellung S der Fronthaube 1.

Anders als in den Fig. 2 und 3 ist in der vorliegenden Ausführungsform nicht der kürzere Lenker 6', sondern der längere Lenker 5' zweiteilbar ausgebildet. Die in Fig. 4 gezeigte Ausführungsform des Scharniers 4' hat insbesondere den Vorteil, daß in der (nicht dargestellten) Öffnungsstellung der überwiegende Teil des Eigengewichts der Fronthaube 1 mit dem hieran angeordneten Haubenteil 8 von dem kürzeren Lenker 6' aufgenommen wird, der jedoch starr und nicht zweiteilbar ausgebildet ist, so daß die elastisch oder plastisch deformierbaren Verbindungsmittel 21 besser auf das Auprallverhalten abgestimmt werden können. Der Aufbau des Lenkers 5' mit Teilen 5'a, 5'b und 5'c ist entsprechend dem Aufbau des zweiteilbaren Lenkers 6 aus Fig. 2 und 3. Der Anschlag 22' ist bei diesem Ausführungsbeispiel an dem Karosserieteil angeordnet.

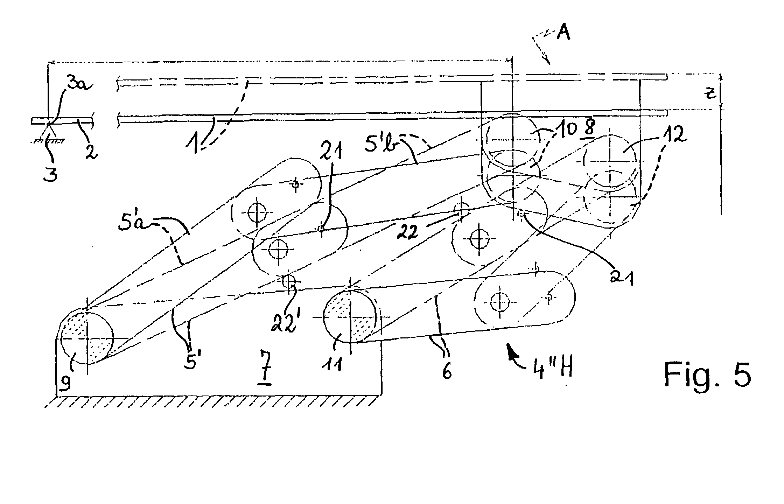

Es ist möglich, eine weitere in Fig. 5 dargestellte Ausführungsform eines Viergelenk-Scharniers 4" für eine Fronthaubenanordnung wie in Fig. 1 gezeigt derart auszugestalten, daß der längere Lenker 5' aus Fig. 4 und der kürzere Lenker 6 aus Fig. 2 und 3 beide jeweils zweiteilbar gemeinsam in einem Viergelenk-Scharnier aufgenommen sind. Diese bevorzugte Ausbildung eines Viergelenk-Scharniers 4 weist besonders den Vorteil auf, daß bei entsprechend günstiger Anordnung der Drehgelenke 6c bzw. 5'c das Viergelenk-Scharnier 4 ein gesperrtes Doppel-Vierglenk definiert, bei dem in der Regel die Zwischengelenke 6c und 5'c nicht zum Einsatz kommen, jedoch im Überlastfall diese mit den Gelenken 10, 12 im Haubenteil ein neues Viergelenk aufspannen. Hierbei kann durch Anschläge oder dergleichen sichergestellt sein, daß die rahmenseitigen Teillenker 5'a, 6a an einem Durchfallen gehindert sind und das neue Viergelenk definiert dann einen neuen Schwenkbereich um die Schwenkachse 3a des Haubenschlosses 3, welches dann nicht horizontal verlagerbar auszubilden wäre. Man erkennt, daß bei dem Mehrgelenk-Scharnier 4" eine horizontale Verlagerung der Fronthaube 1 im Überlastfall nicht mehr auftritt, so daß das Haubenschloß 3 konventionell ausgebildet werden kann.

Alternativ ist es möglich die Anschläge im Bereich der Teillenker 5'b, 6b vorzusehen, wodurch dann das "untere" Viergelenk mit den Gelenken 9, 11, 5'c und 6c wirksam wäre. Ein besonderer Vorteil dieser Ausgestaltung besteht darin, daß sich die Aufprallenergie auf beide Lenker (beider Viergelenk-Scharniere) zum Abscheren des Bolzens 21 oder bei entsprechender Ausbildung zum Dehnen einer Feder verteilt, wodurch die Umwandlung der Energie besser gestaltbar ist. Insbesondere ist es möglich, die Abscherbolzen 21 dann derart auszugestalten, daß definiert zunächst der eine und dann der andere abschert. Dies ist besonders dann bedeutsam, wenn unterschiedliche Aufprallenergien beispielsweise bei asymmetrischem Aufprall auf die Fronthaube 1 oder bei unterschiedlichem Gewicht der aufprallenden Person, beispielsweise bei einem Kind bzw. bei einem Erwachsenem, bei der Auslegung zu berücksichtigen. sind.

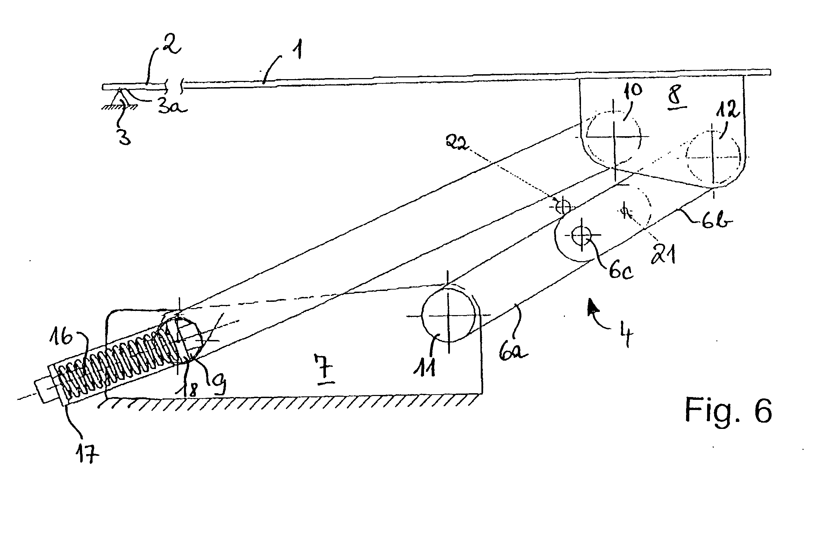

Eine weitere vorteilhafte Ausführungsform eines Viergelenk-Scharniers 4 für die Fronthaubenanordnung aus Fig. 1 ist in Fig. 6 dargestellt, welche eine Weiterbildung der Fronthaubenanordnung der Fig. 1 bis 3 mit Viergelenk-Scharnier 4 zeigt, wobei diese Weiterbildung auch für das Viergelenk-Schamiere 4' oder einer Kombination aus diesen beiden in Betracht kommt. Bei der weitergebildeten Fronthaubenanordnung ist einer der Drehpunkte 9 und 11 des längeren Lenkers 5 bzw. kürzeren Lenkers 6 nicht starr in dem Rahmenteil 7, sondern komprimierbar relativ zu dem Rahmenteil 7 auf einer gegen die Vorspannung einer als Druckfeder ausgebildeten Energiespeichereinheit 16, im wesentlichen in Verlängerung der Erstreckung des der Feder 16 zugeordneten längeren Lenkers 5, gelagert. Hierdurch wird die Lage des Drehgelenks 9 veränderlich ausgestaltet, wodurch das Haubenschloß 3 keine horizontale Verlagerung x wie in Fig. 3 auszuführen braucht, sondern die Fronthaube 1 lediglich eine Schwenkbewegung um die Achse 3a des Haubenschlosses 3 ausführt.

In der in Fig. 6 gezeigten Ausführungsform ist die Energiespeichereinheit 16 in etwa in axialer Verlängerung des längeren Lenkers 5 angeordnet und trägt dessen, dem Rahmenteil 7 zugeordnetes, Drehgelenk 9 auf einem in einer Führung 17 angeordneten Reiter 18. Die in das Rahmenteil 7 integrierte Führung 17 ist im wesentlichen mit der Erstreckung des längeren Lenkers 5 im Belastungsfall H aufgrund der Last eines Aufpralfs A eines Fußgängers ausgefluchtet. Vergleichbar zu der Ausführungsform der Fig. 2 und 3 erfolgt die Zweiteilung des kürzeren Lenkers 6 um das Drehgelenk 6c, das vorzugsweise durch einen Abscherbolzen 21 oder eine Druckfeder ausgebildet ist.

Die Erfindung ist vorstehend anhand von verschiedenen Ausführungsbeispielen näher erläutert worden, die sämtlichst irreversibel, als abscherbare Bolzen ausgebildete Verriegelungen gezeigt haben, die besonders kostengünstig sind. Es versteht sich, daß in gleicher Weise wie die plastisch änderbaren Materialbestandteile 21 auch Federn vorgesehen sein können, die eine reversible Ver- und Entriegelung der zweiteilbaren ausgebildeten Lenkers 5' und/oder 6 bewirken, die dadurch einen geringeren mechanischen Aufwand nach einem Aufprall zur Wiederherstellung der Fahrbereitschaft bedeuten.

## Patentansprüche

1. Fronthaubenanordnung, bei der eine Fronthaube (1) eines Fahrzeugs über mindestens ein Viergelenk-Scharnier (4) an den Rahmen des Fahrzeugs angelenkt ist, wobei das Viergelenk durch zwei beidendig schwenkbar ausgebildete Lenker (5, 6; 5', 6') eine Verschwenkung der Fronthaube (1) zwischen einer Öffnungslage und einer Schließlage ermöglicht,
**dadurch gekennzeichnet,**
**daß** das mindestens eine Viergelenk-Scharnier (4) unter der Last eines Aufpralls eines Fußgängers wenigstens einen wenigstens zweiteilbaren Lenker (6; 5') aufweist.

2. Fronthaubenanordnung nach Anspruch 1, **dadurch gekennzeichnet, daß** der wenigstens eine zweiteilbare Lenker (6; 5') unter der Last eines Aufpralls in zwei Teillenker (6a, 6b; 5'a, 5'b) trennbar ist.

3. Fronthaube nanordnung nach Anspruch 1 oder 2, **dadurch gekennzeichnet, daß** die Fronthaube in der Schließlage über wenigstens ein Haubenschloß (3) verschließbar ist.

4. Fronthaubenanordnung nach einem der Ansprüche 1 bis 3, **dadurch gekennzeichnet, daß** die Fronthaube (1) bei einem Fußgängeraufprall in ihrem hinteren Bereich absenkbar ist.

5. Fronthaubenanordnung nach einem der Ansprüche 1 bis 4, **dadurch gekennzeichnet, daß** die an der Fronthaube (1) angeschlagenen Drehgelenke (10, 12) der Lenker (5, 6) des Viergelenk-Scharniers (4) bei Aufprall eines Fußgängers auf die Fronthaube (1) eine definierte Bewegung um ein die beiden Teillenker (6a, 6b; 5'a, 5'b) verbindende Gelenk (6c; 5'c) an Stelle des karosserieseitigen Gelenks (9, 11) des zweiteilbaren Lenkers (6, 5') sowie um das fest an der Karosserie des Fahrzeugs angeordnete Drehgelenk des anderen Lenkers (9; 11) ausführen.

6. Fronthaubenanordnung nach einem der Ansprüche 1 bis 4, **dadurch gekennzeichnet, daß** die an der Fronthaube (1) angeschlagenen Drehgelenke (10, 12) der Lenker (5, 6) des Viergelenk-Scharniers (4) bei Aufprall eines Fußgängers auf die Fronthaube (1) eine definierte Bewegung um ein die beiden Teillenker verbindende Gelenk (6c; 5'c) an Stelle des karosserieseitigen Gelenks des zweiteilbaren Lenkers (6; 5') sowie um das an der Karosserie des Fahrzeugs angeordnete Drehgelenk (9; 11) des anderen Lenkers (5; 6') ausführen, und daß bei einem Aufprall einer der andere Lenker (5; 6') mit seinem karosserieseitigen Drehgelenk (9; 11) eine in Richtung auf die Ruhelage des Lenkers vorgespannten Energiespeichereinheit (16) gegen seine Vorspannung zur wenigstens teilweisen Kompensation der Teilung des mit zweiteifbaren Lenkers (6, 5') spannt.

7. Fronthaubenanordnung nach Anspruch 6, **dadurch gekennzeichnet, daß** die Energiespeichereinheit (16) im wesentlichen in axialer Verlängerung des zugeordneten Lenkers (5) angeordnet ist, wenn das an der Fronthaube (1) angeordnete Scharnierteil (8) des Viergelenk-Schamiers (4) durch Trennung der Verbindung des zweiteilbaren Lenkers (6, 5') bei einem Aufprall auf die Fronthaube (1) aus seiner Ausgangsstellung heraus verlagert ist.

8. Fronthaubenanordnung nach einem der Ansprüche 1 bis 7 **dadurch gekennzeichnet, daß** die beiden Teillenker (6a, 6b; 5'a, 5'b) bei Überlast einen Winkel zueinander einnehmen, der den Verlagerungsweg eines anderen, ungeteilten Lenkers des Viergelenk-Scharniers (4) ausgleicht.

9. Fronthaubenanordnung nach einem der Ansprüche 2 bis 4, **dadurch gekennzeichnet, daß** die beiden Teillenker gelenkig miteinander verbunden sind.

10. Fronthaubenanordnung nach einem der Ansprüche 1 bis 9, **dadurch gekennzeichnet, daß** der zweiteilbare Lenker (6; 5') über einen abscherbaren Bolzen (21) zwei Teillenker (6a, 6b; 5'a, 5'b) starr miteinander verbindet.

11. Fronthaubenanordnung nach Anspruch 10, **dadurch gekennzeichnet, daß** der abscherbare Bolzen unter (21) einer Last eines Aufprails die starre Verbindung löst.

12. Fronthaubenanordnung nach einem der Ansprüche 10 oder 11, **dadurch gekennzeichnet, daß** der abscherbare Bolzen (21) ersetzbar ist.

13. Fronthaubenanordnung nach einem der Ansprüche 1 bis 12, **dadurch gekennzeichnet, daß** beiderseits der Fronthaube (1) jeweils ein Scharnier (4; 4') angeordnet ist.

14. Fronthaubenanordnung nach einem der Ansprüche 1 bis 13, **dadurch gekennzeichnet, daß** die Fronthaube (1) zugleich mit der Zweiteilung des wenigstens einen Lenkers (6; 5') eine Verlagerungsbewegung (x) in Richtung auf die Windschutzscheibe des Fahrzeugs ausführt.

15. Fronthaubenanordnung nach einem der Ansprüche 3 bis 14, **dadurch gekennzeichnet, daß** das Haubenschloß (3) in seinem geschlossenen Zustand ein horizontales Verlagern der Fronthaube (1) zuläßt.

16. Fronthaubenanordnung nach Anspruch 15, **dadurch gekennzeichnet, daß** das Haubenschloß (3) insgesamt verlagerbar ist.

17. Fronthaubenanordnung nach Anspruch 15, **dadurch gekennzeichnet, daß** das Haubenschloß (3) einen Ausweichraum im Anschluß an seine verriegelte Schließlage aufweist, der eine Führung für eine im wesentlichen horizontale Verlagerung (x) der Fronthaube (1) nach hinten definiert.

18. Fronthaubenanordnung nach einem der Ansprüche 15 bis 17, **dadurch gekennzeichnet, daß** ein Energiespeicherglied das Haubenschloß (3) entgegen einer Verlagerung vorspannt und bei einem Aufprall das Energiespeicherglied unter Aufnahme eines Teils der Aufprallenergie spannbar ist.

19. Fronthaubenanordnung nach einem der Ansprüche 1 bis 18, **dadurch gekennzeichnet, daß** der Abstand der beiden Drehpunkte (10, 12) des wenigstens einen zweiteilbaren Lenkers (6) sich bei einem Aufprall eines Fußgängers verringert.

20. Fronthaubenanordnung nach einem der Ansprüche 3 bis 19, **dadurch gekennzeichnet, daß** das Scharnier (4) derart an dem Rahmen des Fahrzeugs angeordnet ist, daß die Fronthaube (1) bei Lösen des Haubenschlosses (3) ohne Zweiteilung des wenigstens einen Lenkers (6; 5') öffnenbar ist.

21. Fronthaubenanordnung nach einem der Ansprüche 1 bis 20, **dadurch gekennzeichnet, daß** das Viergelenk-Scharnier (4) als Teil eines Siebengelenk-Scharnier ausgebildet ist.

22. Fronthaubenanordnung nach einem der Ansprüche 1 bis 21, **dadurch gekennzeichnet, daß** die Fronthaube (1) in fahrbereitem Zustand des Fahrzeugs in einer nachgiebigen angehobenen Lage angeordnet ist.

23. Viergelenkscharnier,
**dadurch gekennzeichnet,**
**daß** der Abstand der beiden Anlenkungen (11, 12; 9, 10) wenigstens eines Lenkers (6; 5') durch eine Überlast veränderbar ist.

24. Viergelenk-Schamier nach Anspruch 23, **dadurch gekennzeichnet, daß** bei Auftreten einer Überlast eine starre Verbindung zweier Teillenker des wenigstens einen Lenker (6;5') bleibend aufgehoben wird.

25. Viergelenk-Scharnier nach Anspruch 23 oder 24, **dadurch gekennzeichnet, daß** die Verbindung als abscherbarer Bolzen ausgebildet ist und daß die beiden Teillenker durch ein Zwischengelenk verbunden sind.

26. Viergelenk-Scharnier nach Anspruch 23 oder 24, **dadurch gekennzeichnet, daß** die Verbindung als zerstörbare Ummantelung der beiden Teillenker ausgebildet ist, die alleine die beiden Teillenker gegenseitig hält.

## Claims

1. A front-hood arrangement, wherein a front hood (1) of a vehicle is coupled to the frame of the vehicle via at least one four-joint hinge (4), wherein the four-joint, via two links (5, 6; 5', 6') designed pivotably at their two ends, enables a pivot movement of the front hood (1) between an opening position and a closing position,
**characterized in**
**that** the at least one four-joint hinge (4) has at least one link (6; 5') which can separate into at least two parts under the load of an impact of a pedestrian.

2. The front-hood arrangement as claimed in claim 1, **characterized in that** the at least one link (6; 5') which can be separated into two parts can be separated under the load of an impact into two partial links (6a, 6b; 5'a, 5'b).

3. The front-hood arrangement as claimed in claim 1 or 2, **characterized in that** the front hood in the closing position can be locked by means of at least one hood lock (3).

4. The front-hood arrangement as claimed in one of claims 1 to 3, **characterized in that** the front hood (1), in the event of an impact of a pedestrian, can be lowered in its rear region.

5. The front-hood arrangement as claimed in one of claims 1 to 4, **characterized in that** the rotary joints (10, 12), which are mounted on the front hood (1), of the links (5, 6) of the four-joint hinge (4), in the event of an impact of a pedestrian on the front hood (1), execute a defined movement about a joint (6c; 5'c) which connects the two partial links (6a, 6b; 5'a, 5'b) instead of the body-side joint (9, 11) of the link (6, 5') which can be separated into two parts and about the rotary joint of the other link (9; 11) which is arranged fixed to the body of the vehicle.

6. The front-hood arrangement as claimed in one of claims 1 to 4, **characterized in that** the rotary joints (10, 12), which are mounted on the front hood (1), of the links (5, 6) of the four-joint hinge (4), in the event of an impact of a pedestrian on the front hood (1), execute a defined movement about a joint (6c; 5'c) which connects the two partial links instead of the body-side joint of the link (6; 5') which can be separated into two parts and about the rotary joint (9; 11), which is arranged on the body of the vehicle, of the other link (5; 6'), and **in that**, in the event of an impact, the body-side rotary joint (9; 11) of the other link (5; 6') stresses an energy storage unit (16), which is prestressed toward the at-rest position of the link, counter to its prestress, in order to at least partially compensate for the fact that the link (6; 5') which can be separated into at least two parts has been separated.

7. The front-hood arrangement as claimed in claim 6, **characterized in that** the energy storage unit (16) is arranged substantially as an axial extension of the associated link (5) when the hinge part (8) of the four-joint hinge (4) arranged on the front hood (1) has been displaced out of its starting position as a result of a separation of the connection of the link (6, 5') which can be separated into two parts in the event of an impact on the front hood (1).

8. The front-hood arrangement as claimed in one of claims 1 to 7, **characterized in that** in the event of an overload, the two partial links (6a, 6b; 5'a, 5'b) adopt an angle with respect to one another which compensates for the displacement travel of the other, unseparated link of the four-joint hinge (4).

9. The front-hood arrangement as claimed in one of claims 2 to 4, **characterized in that** the two partial links are pivotably coupled with one another.

10. The front-hood arrangement as claimed in one of claims 1 to 9, **characterized in that** the link (6; 5') which can be separated into two parts rigidly connects two partial links (6a, 6b; 5'a, 5'b) to one another by means of a bolt (21) which can be sheared off.

11. The front-hood arrangement as claimed in claim 10, **characterized in that** the shear-off bolt (21) releases the rigid connection under the load of an impact.

12. The front-hood arrangement as claimed in one of claims 10 or 11, **characterized in that** the shear-off bolt (21) is replaceable.

13. The front-hood arrangement as claimed in one of claims 1 to 12, **characterized in that** a hinge (4; 4') is arranged on both sides of the front hood (1).

14. The front-hood arrangement as claimed in one of claims 1 to 13, **characterized in that** the front hood (1), at the same time as the at least one link (6; 5') is being separated into two, executes a translational movement (x) in the direction toward the windshield of the vehicle.

15. The front-hood arrangement as claimed in one of claims 3 to 14, **characterized in that** the hood lock (3) allows horizontal displacement of the front hood (1) in its locked position.

16. The front-hood arrangement as claimed in claim 15, **characterized in that** the hood lock (3) overall is displaceable.

17. The front-hood arrangement as claimed in claim 15, **characterized in that** the hood lock (3) has a yield space adjoining its locked position, which provides defined guidance for a substantially horizontal displacement (x) of the front hood (1) toward the rear.

18. The front-hood arrangement as claimed in one of claims 15 to 17, **characterized in that** an energy storage member prestresses the hood lock (3) in the opposite direction to a displacement and, in the event of an impact, the energy storage member can be stressed, so as to absorb some of the impact energy.

19. The front-hood arrangement as claimed in one of claims 1 to 18, **characterized in that** the distance between the two rotation points (10, 12) of the at least one link (6) which can be separated into two parts is reduced in the event of an impact of a pedestrian.

20. The front-hood arrangement as claimed in one of claims 3 to 19, **characterized in that** the hinge (4) is arranged on the frame of the vehicle in such a manner that the front hood (1) can be opened when the hood lock (3) is released without the at least one link (6; 5') being separated into two parts.

21. The front-hood arrangement as claimed in one of claims 1 to 20, **characterized in that** the four-joint hinge (4) is designed as a part of a seven-joint hinge.

22. The front-hood arrangement as claimed in one of claims 1 to 21, **characterized in that** the multiple-joint hinge (4), when the vehicle is ready to drive, is arranged in a resilient, raised position.

23. A four-joint hinge,
**characterized in**
**that** the distance between the two articulation points (11, 12; 9, 10) of at least one link (6; 5') can be changed by means of an overload.

24. The four-joint hinge as claimed in claim 23, **characterized in that**, in the event of an overload, a rigid connection between two partial links of the at least one link (6; 5') is permanently eliminated.

25. The multiple-joint hinge as claimed in claim 23 or 24, **characterized in that** the connection is designed as a bolt which can be sheared off, and **in that** the two partial links are connected by an intermediate joint.

26. The multiple-joint hinge as claimed in claim 23 or 24, **characterized in that** the connection is designed as a destructible covering of the two partial links, which alone holds the two links with respect to one another.

## Revendications

1. Ensemble de capot avant dans lequel un capot avant (1) d'un véhicule est articulé via au moins une charnière à quadruple articulations (4) sur le châssis d'un véhicule, le quadrilatère permettant, via deux bras (5, 6 ; 5', 6') conformées de façon à pouvoir pivoter des deux extrémités, de faire basculer le capot avant (1) entre une position ouverte et une position fermée,
**caractérisé en ce**
**que** l'au moins une charnière à quadruple articulations (4) comporte au moins un bras (6 ; 5') divisible en au moins deux parties (6 ; 5') sous l'effort généré par une collision avec un piéton.

2. Ensemble de capot avant selon la revendication 1, **caractérisé en ce que** l'au moins un bras (6 ; 5'), divisible en deux parties, sous l'effort généré par une collision est séparable en deux bras secondaires (6a, 6b ; 5'a, 5'b).

3. Ensemble de capot avant selon la revendication 1 ou 2, **caractérisé en ce que** le capot avant peut être verrouillé dans la position de fermeture au moyen d'au moins une serrure de capot (3).

4. Ensemble de capot avant selon l'une des revendications 1 à 3, **caractérisé en ce que** le capot avant (1) peut s'abaisser dans sa région arrière en cas de collision avec un piéton.

5. Ensemble de capot avant selon l'une des revendications 1 à 4, **caractérisé en ce que** les articulations (10, 12), montées sur le capot avant (1), des bras (5, 6) de la charnière à quadruple articulations (4) réalise en cas de collision avec un piéton sur le capot avant (1) un mouvement défini autour d'une articulation reliant les deux bras secondaires (6a, 6b ; 5'a, 5'b) à la place de l'articulation (9, 11), du côté de la carrosserie, du bras (6, 5') divisible en deux parties ainsi qu'autour de l'articulation, agencée fixe au niveau de la carrosserie du véhicule, de l'autre bras (9 ; 11).

6. Ensemble de capot avant selon l'une des revendications 1 à 4, **caractérisé en ce que** les articulations (10, 12), montées sur le capot avant (1), des bras (5, 6) de la charnière à quadruple articulations (4) réalisent lors d'une collision avec un piéton sur le capot avant (1) un mouvement défini autour d'une articulation (6c ; 5'c) reliant les deux bras secondaires à la place de l'articulation, du côté de la carrosserie du véhicule, du bras (6 ; 5') divisible en deux parties ainsi qu'autour de l'articulation (9 ; 11), agencée sur la carrosserie du véhicule, de l'autre bras (5 ; 6'), et **en ce que** lors d'une collision l'un des autres bras (5 ; 6'), doté de son articulation (9 ; 11) du côté de la carrosserie, tend une unité d'accumulation d'énergie (16), préalablement tendue en direction de la position de repos du bras, en s'opposant contre la tension préalable en vue de compenser au moins partiellement la division du bras (6, 5') divisible en deux parties.

7. Ensemble de capot avant selon la revendication 6, **caractérisé en ce que** l'unité d'accumulation d'énergie (16) est agencée sensiblement dans le prolongement axial du bras associé (5) lorsque la partie formant charnière (8), agencée sur le capot avant (1), de la charnière à quadruple articulations (4) et en séparant de sa position de départ la liaison du bras (6, 5') divisible en deux parties lors d'une collision sur le capot avant (1).

8. Ensemble de capot avant selon l'une des revendications 1 à 7, **caractérisé en ce que** les deux bras secondaires (6a, 6b; 5'a, 5'b) forment en cas d'effort excessif un angle qui compense le déplacement d'un autre bras, non divisé, de la charnière à quadruple articulations (4).

9. Ensemble de capot avant selon l'une des revendications 2 à 4, **caractérisé en ce que** les deux bras secondaires sont reliés l'un à l'autre de façon articulée.

10. Ensemble de capot avant selon l'une des revendications 1 à 9, **caractérisé en ce que** le bras divisible en deux parties (6 ; 5') relie rigidement l'un à l'autre deux bras secondaires au moyen d'un boulon à cisaillement (21).

11. Ensemble de capot avant selon la revendication 10, **caractérisé en ce que** le boulon à cisaillement (21) supprime la liaison rigide lors d'un effort dû à une collision.

12. Ensemble de capot avant selon l'une des revendications 10 à 11, **caractérisé en ce que** le boulon à cisaillement (21) est remplaçable.

13. Ensemble de capot avant selon l'une des revendications 1 à 12, **caractérisé en ce qu'**une charnière (4 ; 4') est agencée des deux côtés du capot avant (1).

14. Ensemble de capot avant selon l'une des revendications 1 à 13, **caractérisé en ce que** le capot avant (1) réalise en même temps que la division en deux parties de l'au moins un bras (6 ; 5') un déplacement (x) en direction du pare-brise du véhicule.

15. Ensemble de capot avant selon l'une des revendications 3 à 14, **caractérisé en ce que** la serrure de capot (3) permet, lorsqu'elle est à l'état fermé, un déplacement horizontal du capot avant (1).

16. Ensemble de capot avant selon la revendication 15, **caractérisé en ce que** la serrure de capot (3) est dans l'ensemble déplaçable.

17. Ensemble de capot avant selon la revendication 15, **caractérisé en ce que** la serrure de capot (3) comporte un espace d'évitement dans le raccordement à une position de fermeture verrouillée qui définit vers l'arrière un guide pour un déplacement sensiblement horizontal (x) du capot avant (1).

18. Ensemble de capot avant selon l'une des revendications 15 à 17, **caractérisé en ce qu'**un élément accumulateur d'énergie de la serrure de capot (3) est préalabiement tendu en s'opposant à un déplacement et en cas de collision l'élément accumulateur d'énergie peut être tendu en recevant une partie de l'énergie de la collision.

19. Ensemble de capot avant selon l'une des revendications 1 à 18, **caractérisé en ce que** la distance entre les deux points d'articulation (10, 12) de l'au moins un bras (6) divisible en deux parties diminue en cas de collision avec un piéton.

20. Ensemble de capot avant selon l'une des revendications 3 à 19, **caractérisé en ce que** la charnière (4) est agencée au niveau du châssis du véhicule de telle sorte que le capot avant (1) peut être ouvert en cas de détachement de la serrure de capot (3) sans diviser en deux l'au moins un bras (6 ; 5').

21. Ensemble de capot avant selon l'une des revendications 1 à 20, **caractérisé en ce que** la charnière à quadruple articulations (4) forme une partie d'une articulation à septuple articulations.

22. Ensemble de capot avant selon l'une des revendications 1 à 21, **caractérisé en ce que** le capot avant (1) est agencé, lorsque le véhicule est prêt à rouler, dans une position soulevée élastique.

23. Charnière à quadruple articulations,
**caractérisée en ce**
**que** la distance entre les deux articulations (11, 12 ; 9, 10) d'au moins un bras (6 ; 5') peut être modifiée par une surcharge.

24. Charnière à quadruple articulations selon la revendication 23, **caractérisée en ce que** en cas de surcharge une liaison rigide de deux bras secondaires de l'au moins un bras (6 ; 5') est éliminée en permanence.

25. Charnière à quadruple articulations selon la revendication 23 ou 24, **caractérisée en ce que** la liaison se présente sous la forme d'un boulon à cisaillement et **en ce que** les deux bras secondaires sont reliés par une articulation intermédiaire.

26. Charnière à quadruple articulations selon la revendication 23 ou 24, **caractérisée en ce que** la liaison se présente sous la forme d'une enveloppe destructible des deux bras secondaires, laquelle maintient à elle seule les deux bras secondaires ensemble.
